# EUROPEAN PATENT APPLICATION

(11) **EP 4 789 748 A1**
(43) Date of publication of application: **12.08.2026**
(21) Application number: 25224884.4
(22) Date of filing: 18.12.2025
(51) Int. Cl.: B01D 46/00, B01D 46/24

(54) **DEHYDRATING FILTER, PARTICULARLY FOR USE IN REFRIGERATION OR AIR CONDITIONING SYSTEMS**

(30) Priority: 10.02.2025 IT 202500002406
(71) Applicant: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(57) **Abstract**

A dehydrating filter (1), particularly for refrigeration or air conditioning systems, the peculiarity of which consists in that it comprises:
- a main body (2) having a substantially axially symmetrical geometry with respect to a longitudinal axis (3) thereof, and defining inside it a chamber (4) which is open at the ends (2a, 2b) of the main body (2);
- a first flanged assembly (6), which is associated hermetically and detachably with the main body (2) at a first end (2a) thereof and is shaped so that it can be connected to a first pipe of a refrigeration or air conditioning system;
- a second flanged assembly (7), which is externally substantially mirror-symmetrical to the first flanged assembly (6), associated hermetically and detachably with the main body (2) at a second end (2b) thereof which is opposite from the first end (2a) and shaped so that it can be connected to a second pipe of the refrigeration or air conditioning system; and

- a filtering assembly (5), which is accommodated in the chamber (4) inside the main body (2) and is interposed between the first flanged assembly (6) and the second flanged assembly (7).

## Description

The present invention relates to a dehydrating filter, particularly for use in refrigeration or air conditioning systems.

In plant engineering for refrigeration or air conditioning, the use is known of particular filters, known as "dehydrating filters", the function of which is to filter the gas circulating in the system, purifying it of substances that are harmful to reliability and which shorten the lifetime of the system.

In more detail, the internal components of a dehydrating filter make it possible to limit the passage of water and acids, so preventing corrosion of the metallic surfaces with which the gas comes into contact, starting from the compressor.

Their construction also makes it possible to prevent the decomposition of gas in oil and the evaporation of oil in gas.

The size of the filter is directly proportional to the quantity of gas that it is intended to filter.

There are many different types of dehydrating filters and their use is very widespread in many and varied sectors.

Consequently, depending on the sectors of use, the entry/exit connections and the type of materials used may vary.

In the air conditioning and refrigeration sectors, there are dehydrating filters, both of the hermetic type and of the type with an interchangeable core.

Conventional hermetic dehydrating filters comprise a device composed of a main body, into which the filtering element is inserted and to the ends of which two sleeves of metallic material are welded or braze welded.

At the ends of the sleeves is a flaring, which allows the installation technician to insert the pipe to be connected to the filter and weld it, or braze weld it, with weld filler material.

A conventional interchangeable-core dehydrating filter is also a device composed of a main housing, open on one side conveniently provided with a perforated flange, into which the filtering element is inserted and on the surface of which, but not necessarily at the ends, two sleeves of metallic material are welded or braze welded, which can have smooth, widened ends or threaded ends.

The open side of the main housing is plugged with a blind flange, with holes around its perimeter, which is attached to the perforated flange of the housing by means of a suitable number of screws, and with sealing gaskets of various types interposed.

Such interchangeable-core dehydrating filters are generally mounted at the factory.

In such case the filtering element is usually supplied already installed.

Alternatively, it is possible for the filtering element to be supplied separately from the housing, leaving the installation to the customer.

It is important to note that, whatever type of dehydrating filter is selected from those described here, at the moment of its replacement it is essential to isolate the filter from the rest of the system, which as is well known is under pressure, by discharging the residual pressure inside the filtering element and only then proceeding to replace the filtering element.

For all these devices it is in any case essential to prevent coolant gas from leaking out, as the gases used are extremely expensive and in some cases highly polluting to the environment, as they contribute to the greenhouse effect or increase the size of the hole in the ozone layer.

Furthermore, the egress of gas from an air-conditioning or refrigeration circuit compromises its performance.

Such conventional hermetic dehydrating filters are not devoid of drawbacks, which manifest themselves both at the manufacturing stage and at the assembly stage, and also during operation and maintenance.

At the manufacturing stage in the factory, for example, there can be a great deal of discarded material if the method of sealing, which can be by welded or braze welded join, is not kept under control.

In fact, during the welding between the body and the sleeves, if the welding parameters are not precise and/or if the filter is not correctly cooled by flushing it internally with cold gas, the high temperatures can damage the filter contents, compromising the efficiency of the finished product.

In the same way, during final installation on-site, the filter may be damaged by the braze welding of pipes for connecting to sleeves.

In fact, this operation, which joins the terminals of the filter to the pipes of the system, is executed by manually welding a tube to each terminal using molten filler material at between 600° and 900° Celsius.

In order to keep the component cool, this operation is performed while wrapping the body of the filter in a wetted rag and directing the flame of the welding torch away from the body toward the ends of the terminals.

If these precautions are not adopted, the efficiency of the product may be permanently compromised.

Furthermore, during operation this type of filter may over time be susceptible to leaks from welds, in particular when used with R744 gas (CO₂) given its high operating pressure, generally up to 150 bar.

In fact, each weld is tested at the production stage, but it can still have non-visible blisters inside, which under conditions of fatigue and changes in pressure may expand until the weld itself fails, in so doing compromising the seal tightness of the entire system.

Again, in operation the presence of water and acids with the passage of time favors the formation of oxides, such as for example rust, which impairs the mechanical characteristics of the filter, rendering its use potentially hazardous.

Finally, owing to its construction a hermetic filter cannot be inspected or repaired, and therefore, once the filtering effect is exhausted, it must be removed and scrapped, and replaced with a new filter.

A further variant of conventional hermetic filters has threaded connections of various types in place of sleeves.

In this manner it is possible to eliminate the risk of damage to the filter from overheating at the installation stage, but at the same time the risk of leaks in the system is increased, if the threadings are not correctly insulated with sealants or copper gaskets.

Conventional interchangeable-core dehydrating filters are also not devoid of drawbacks which, if the filter is installed without having first removed the filtering element inside it, coincide with the drawbacks of the hermetic filters described above.

However, if the filtering element is removed before installation, the risk of overheating during installation is eliminated, but the potential sealing problems described above remain unchanged.

In addition to this, the even temporary removal of the filtering element can result in its premature saturation, owing to its exposure to the humidity and impurities in the environment.

Furthermore, all conventional dehydrating filters generally have no flow control and/or discharge valves, and their insertion in the system is independent of the filtering system and normally the result of ingenuity on the part of the designer.

This situation generates a great variability in methods of construction of systems which, in the event of wrong design or construction, can in turn lead to leaks and malfunctions.

The aim of the present invention is to provide a dehydrating filter, particularly for use in refrigeration or air conditioning systems, which is capable of improving the known art in one or more of the above mentioned aspects.

Within this aim, an object of the invention is to provide a dehydrating filter in which it is possible to considerably reduce the material discarded at the production stage owing to imperfect sealing of the body of the filter.

Another object of the invention is to provide a dehydrating filter in which it is possible to prevent damage to the filtering element at the production or installation stages.

A further object of the invention is to provide a dehydrating filter for which it is an easy matter to inspect and maintain the filtering element.

Furthermore, the present invention sets out to overcome the drawbacks of the background art in a manner that is alternative to any existing solutions.

Another object of the invention is to provide a dehydrating filter that is highly reliable, easy to implement, and at low cost.

This aim and these and other objects which will become better apparent hereinafter are achieved by a dehydrating filter according to claim 1, optionally provided with one or more of the characteristics of the dependent claims.

Further characteristics and advantages of the invention will become more apparent from the detailed description of a preferred, but not exclusive, embodiment of a dehydrating filter according to the invention, which is illustrated for the purposes of non-limiting example in the accompanying drawings wherein:
- Figure 1 is a partially exploded perspective view of a dehydrating filter according to the invention;

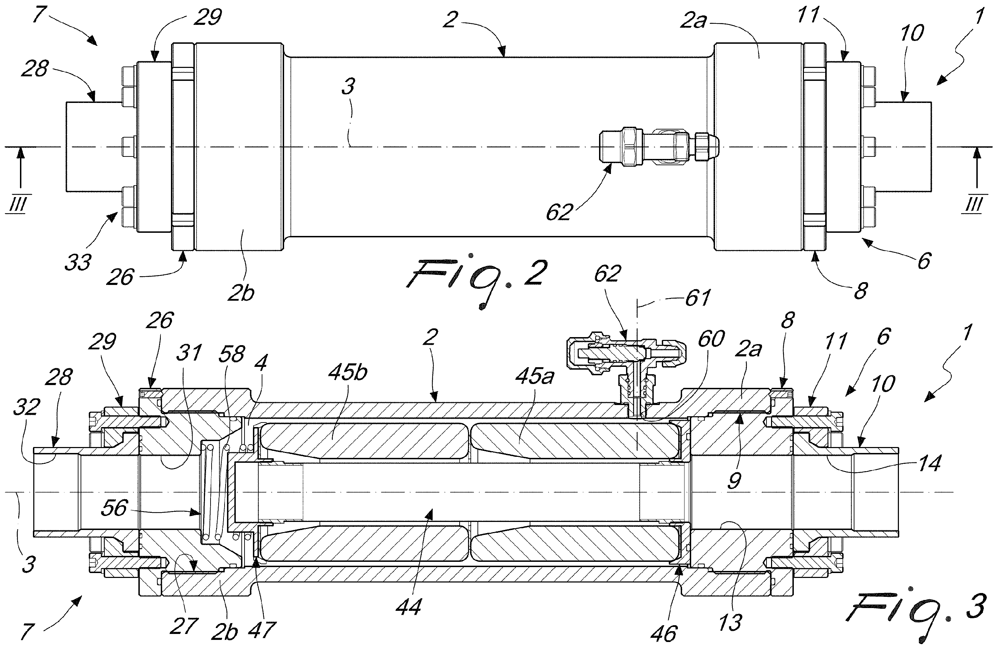

- Figure 2 is a plan view from above of the dehydrating filter shown in Figure 1;
- Figure 3 is a cross-sectional view of the dehydrating filter shown in Figure 2, taken along the line III-III;

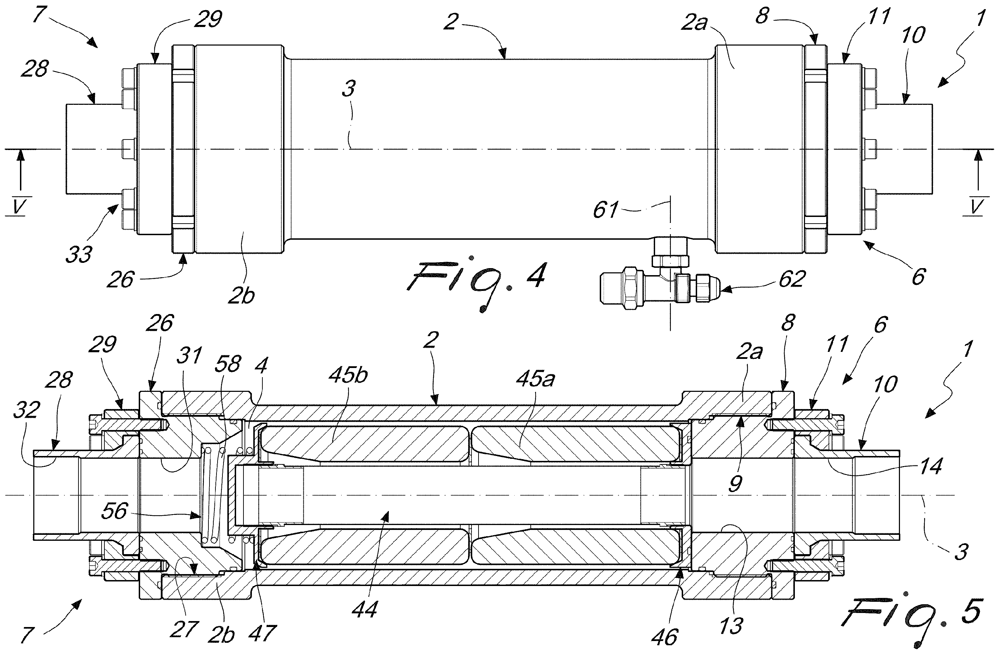

- Figure 4 is a side view of the dehydrating filter shown in the previous figures;
- Figure 5 is a cross-sectional view of the dehydrating filter shown in Figure 2, taken along the line V-V;
- Figure 6 is an enlarged-scale detail of the dehydrating filter shown in Figure 5;
- Figure 7 is another enlarged-scale detail of the dehydrating filter shown in Figure 5;
- Figure 8 is an exploded plan view from below of the dehydrating filter shown in the previous figures;
- Figure 9 is a cross-sectional view of the dehydrating filter shown in Figure 8, taken along the line IX-IX.

With reference to the figures, the dehydrating filter according to the invention is generally designated by the reference numeral 1 and comprises a main body 2 made, for example, of brass or stainless steel which has a substantially axially symmetrical geometry with a circular base with respect to its longitudinal axis 3 and defining inside it a chamber 4 which is open at the ends of the main body 2 for a filtering assembly 5 to be inserted inside it.

According to the invention, at a first end 2a of the main body 2, the dehydrating filter 1 comprises a first flanged assembly 6 which is associated hermetically and detachably with the main body 2 and is shaped so that it can be connected to a first pipe of a refrigeration or air conditioning system.

Also according to the invention, at a second end 2b of the main body 2, which is opposite from the first end 2a, the dehydrating filter 1 comprises a second flanged assembly 7, which is externally substantially mirror-symmetrical to the first flanged assembly 6, associated hermetically and detachably with the main body 2 and shaped so that it can be connected to a second pipe of the refrigeration or air conditioning system.

In this manner, the filtering assembly 5 accommodated in the chamber 4 is interposed between the first flanged assembly 6 and the second flanged assembly 7.

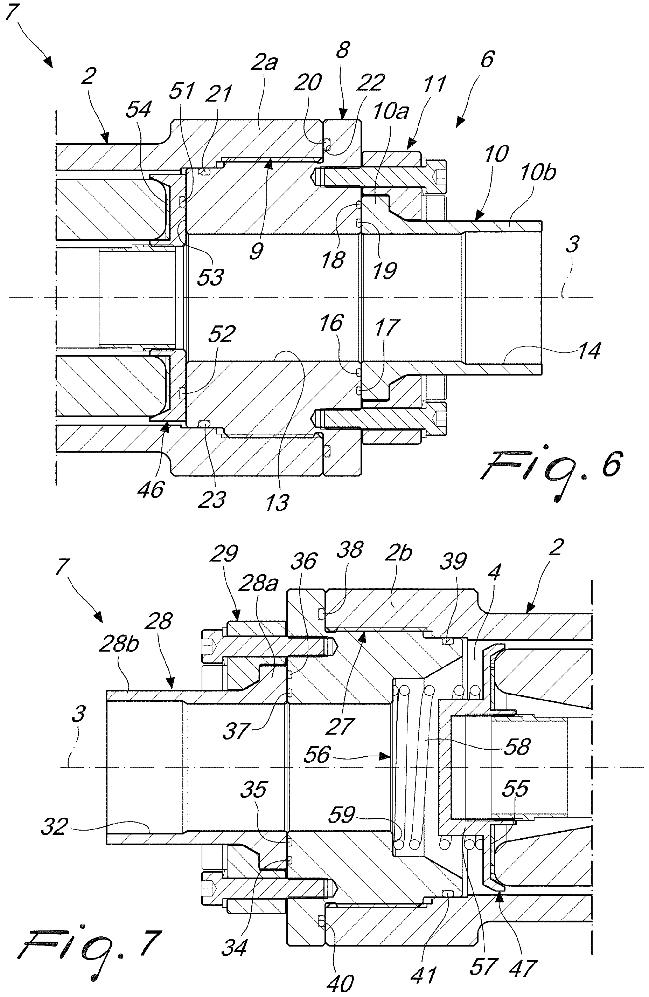

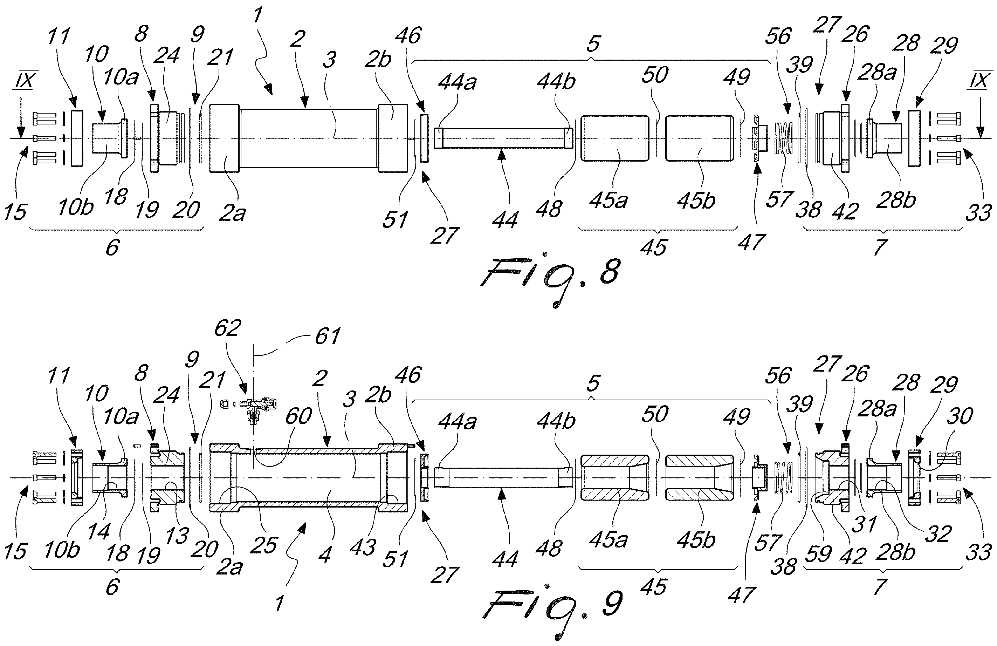

With particular reference to Figures 6, 8 and 9, the first flanged assembly 6 comprises:
- a first perforated ring 8, made for example of brass or stainless steel, which is associated hermetically and detachably with the main body 2 by virtue of first fixing means 9 at the first end 2a;
- a first sleeve 10, made for example of brass or stainless steel, which is associated hermetically and detachably with the first perforated ring 8 on the opposite side with respect to the main body 2 and comprises a first radially widened portion 10a, which rests on the first perforated ring 8, and a first tubular portion 10b which is opposite from the first radially widened portion 10a and is designed to be engaged by the first pipe of the system, for example by means of braze welding;
- a first perforated flange 11, made for example of brass or stainless steel, which is detachably associated with the first perforated ring 8 by means of first screw means 15 along the longitudinal axis 3 on the opposite side with respect to the main body 2, so that the first sleeve 8 is inserted into the first perforated flange 11, through its central hole 12, at the first tubular portion 10a and is interposed between the first perforated flange 11 and the first perforated ring 8 at its first radially widened portion 10b.

Conveniently, the first perforated ring 8 and the first sleeve 10 are connected to each other through respective central holes 13 and 14 thereof.

In the embodiment proposed, the first screw means 15 comprise a series of first screws, complete with first one-way washers, engaged in respective first threaded holes defined on the main body 2.

Conveniently, at its face intended to make contact with the first sleeve 10, the first perforated ring 8 has two sealing seats 16 and 17 for two respective annular gaskets 18 and 19.

In this way, the inner radial seal of the first flanged assembly 6 is ensured.

Differently, the seal between the main body 2 and the first flanged assembly 6 is ensured by another pair of two annular gaskets 20 and 21 which are arranged, respectively, to provide a radial seal and a face seal in respective seats 22 and 23 defined on the first perforated ring 8.

In more detail, the two annular gaskets 20 and 21 are arranged in adapted seats which are dimensioned so that, with the dehydrating filter 1 assembled and the first flanged assembly 6 in abutment against the main body 2, the elastomers end up being contained inside closed chambers and cannot be forced out from their seats by the pressure.

Considering the first fixing means 9, these comprise a first threaded connection, which is provided between the main body 2 and the first perforated ring 8 at the first end 2a and comprises a first male thread 24 defined on one of either the main body 2 or the first perforated ring 8, i.e. on the outer surface of the first perforated ring 8, and a first female thread 25 which corresponds to the first male thread 24 and is defined on the other one of either the main body 2 or the first perforated ring 8, i.e. on the inner surface of the main body 2 at the first end 2a.

With particular reference to Figures 7 to 9, similarly to the first flanged assembly 6, the second flanged assembly 7 comprises:
- a second perforated ring 26, made for example of brass or stainless steel, which is associated hermetically and detachably with the main body 2 by virtue of second fixing means 27 at the second end 2b;
- a second sleeve 28, made for example of brass or stainless steel, which is associated hermetically and detachably with the second perforated ring 26 on the opposite side with respect to the main body 2 and comprises a second radially widened portion 28a, which rests on the second perforated ring 26, and a second tubular portion 28b which is opposite from the second radially widened portion 28a and is designed to be engaged by the second pipe of the system, for example by means of braze welding;
- a second perforated flange 29, made for example of brass or stainless steel, which is detachably associated with the second perforated ring 26 by means of second screw means 33 along the longitudinal axis 3 on the opposite side with respect to the main body 2, so that the second sleeve 26 is inserted into the second perforated flange 29, at the second tubular portion 28a, through its central hole 30, and is interposed between the second perforated flange 29 and the second perforated ring 26 at its second radially widened portion 28b.

Conveniently, the second perforated ring 26 and the second sleeve 28 are in communication with each other and with the chamber 4 through respective central holes 31 and 32 thereof.

In the embodiment proposed, the second screw means 33 comprise a series of second screws, complete with second one-way washers, engaged in respective second threaded holes defined on the main body 2.

Conveniently, at its face intended to make contact with the second sleeve 28, the second perforated ring 26 has two sealing seats 34 and 35 for two respective annular gaskets 36 and 37.

In this way, the inner radial seal of the second flanged assembly 7 is ensured.

Differently, the seal between the main body 2 and the second flanged assembly 7 is ensured by another pair of two annular gaskets 38 and 39 which are arranged, respectively, to provide a radial seal and a face seal in respective seats 40 and 41 defined on the second perforated ring 26.

In more detail, the two annular gaskets 38 and 39 are arranged in adapted seats which are dimensioned so that, with the dehydrating filter 1 assembled and the second flanged assembly 7 in abutment against the main body 2, the elastomers end up being contained inside closed chambers and cannot be forced out from their seats by the pressure.

Considering the second fixing means 27, these comprise a second threaded connection, which is provided between the main body 2 and the second perforated ring 26 at the second end 2b and comprises a second male thread 42 defined on one of either the main body 2 or the second perforated ring 26, i.e. on the outer surface of the second perforated ring 26, and a second female thread 43 which corresponds to the second male thread 42 and is defined on the other one of either the main body 2 or the second perforated ring 26, i.e. on the inner surface of the main body 2 at the second end 2b.

Considering the filtering assembly 5, this comprises:
- a mesh filtering sleeve 44, made for example of stainless steel, which has a substantially tubular geometric shape;
- at least one filtering cartridge 45 fitted on the mesh filtering sleeve 44;
- a first and a second filter holder disk 46 and 47, made for example of aluminum, which are associated, respectively, with the end portions 44a and 44b of the mesh filtering sleeve 44 so as to axially couple the filtering cartridge 45 and the mesh filtering sleeve 44 to each other; and
- at least two cloth disks 48 and 49 which are interposed, respectively, between: the first filter holder disk 46 and the filtering cartridge 45 and between the filtering cartridge 45 and the second filter holder disk 47.

In the embodiment proposed, the filtering cartridge 45 comprises two filtering cartridges 45a and 45b fitted in series on the mesh filtering sleeve 44, and there is an additional cloth disk 50 interposed between these two filtering cartridges 45a and 45b.

More specifically, the filtering assembly 5 is accommodated in the chamber 4 so that the first filter holder disk 46 is located at the first end 2a of the main body 2 and so that the second filter holder disk 47 is located at the second end 2b of the main body 2.

With particular reference to Figure 6, the first filter holder disk 46 is of the perforated type and is hermetically associated centrally and coaxially both with the mesh filtering sleeve 44 and with the first flanged assembly 6 so as to connect the inside of the mesh filtering sleeve 44 to the inside of the first flanged assembly 6 and isolate the inside of the chamber 4 from the inside of the first flanged assembly 6.

In this manner, with the dehydrating filter 1 installed, the inside of the mesh filtering sleeve 44 is connected directly to the first pipe of the system by virtue of the first flanged assembly 6.

Conveniently, the first filter holder disk 46 is provided with a dedicated annular gasket 51 which is accommodated in a respective groove 52 in such a way that, with the filtering assembly 5 installed, it is interposed between an abutment surface 53 of the first flanged assembly 6 and the first filter holder disk 46.

With particular reference to the Figure 7, differently from the first filter holder disk 46, the second filter holder disk 47 is of the closed type, is hermetically associated centrally and coaxially with the mesh filtering sleeve 44, and is spaced apart from the second flanged assembly 7 so as to connect the chamber 4 to the inside of the second flanged assembly 7 and isolate the inside of the mesh filtering sleeve 44 from the inside of the second flanged assembly 7.

In this way, with the dehydrating filter 1 installed, the chamber 4 is connected directly to the second pipe of the system by virtue of the second flanged assembly 7.

Conveniently, the seal both of the first and of the second filter holder disk 46 and 47 with the one or more filtering cartridges 45a and 45b is ensured by two rubber rings 54 and 55 interposed between them and the one or more filtering cartridges 45a and 45b.

Moreover, elastic means 56 are interposed between the second flanged assembly 7 and the second filter holder disk 47 so as to compress the filtering assembly 5 into a pack.

In more detail, the second filter holder disk 47 comprises a shank 57 which protrudes axially toward the second flanged assembly 7 along the longitudinal axis 3 and the elastic means 56 comprise a helical spring 58, made for example of stainless steel, which is partially fitted over such shank 57 and rests on a contrast wall 59 of the second flanged assembly 7, i.e. of the second perforated ring 26.

The thrust exerted by the helical spring 58 ensures the seal of the dedicated annular gasket 51 interposed between the filtering assembly 5 and the first flanged assembly 6.

Completing the dehydrating filter 1, the main body 2 has a first lateral opening 60 which is located at a portion of the chamber 4, extends along an axis 61 which is transverse with respect to the longitudinal axis 3, and is in communication with the chamber 4.

Such first lateral opening 60 is selectively connectable to a tap 62 for charging and discharging a refrigerant gas, and is provided with a first closure cap, not shown, which can be arranged in place of the tap 62.

Conveniently, the seal between the tap 62 and the main body 2 is ensured by the presence of a suitable annular gasket.

In a possible variation (not shown) of the dehydrating filter 1, the main body 2 can have a second lateral opening which is located at another portion of the chamber 4, extends along another, or the same, transverse axis 61 and is in communication with the chamber 4.

This second lateral opening can therefore be selectively connected to a system for draining condensation and will be provided with a second closure cap, which can be used when it is not connected to the condensation drainage system.

In the embodiment proposed, the screws of the cited screw means and the respective one-way washers are made for example of stainless steel, and the cited annular gaskets are made of neoprene, HNBR (Hydrogenated Nitrile Butadiene Rubber) or EPDM (Ethylene-Propylene Diene Monomer), depending on the refrigerant fluids used.

The operation of the dehydrating filter 1 is clear and evident from the foregoing description.

By virtue of the mirror-symmetry of the two flanged assemblies 6 and 7, it is possible to install the dehydrating filter axially, irrespectively, on the pipes of the system and with an orientation chosen so that the filtration occurs from within the mesh filtering sleeve 44 to the chamber 4.

The dehydrating filter 1 can be connected to a refrigeration system as follows.

Once the perforated flanges 11 and 29 have been unscrewed and separated from the respective flanged assemblies 6 and 7, the sleeves 10 and 28 can be welded to the pipes to be connected, while leaving the filtering assembly 5, i.e. the delicate part of the dehydrating filter 1, far from the area where the welding operation is executed.

After welding, when they have cooled, the perforated flanges 11 and 29 are reconnected to the respective flanged assemblies 6 and 7 using the screws complete with one-way washers, and taking care that the annular gaskets are correctly inserted in the dedicated seats.

Furthermore, using the tap 62 it is possible to:
- release the residual pressure in total safety when it is decided to change the filtering cartridges 45a and 45b;
- recharge the entire system with coolant during the stages of testing/trialling/bringing into service;
- create the "vacuum" prior to the stage of bringing into service.

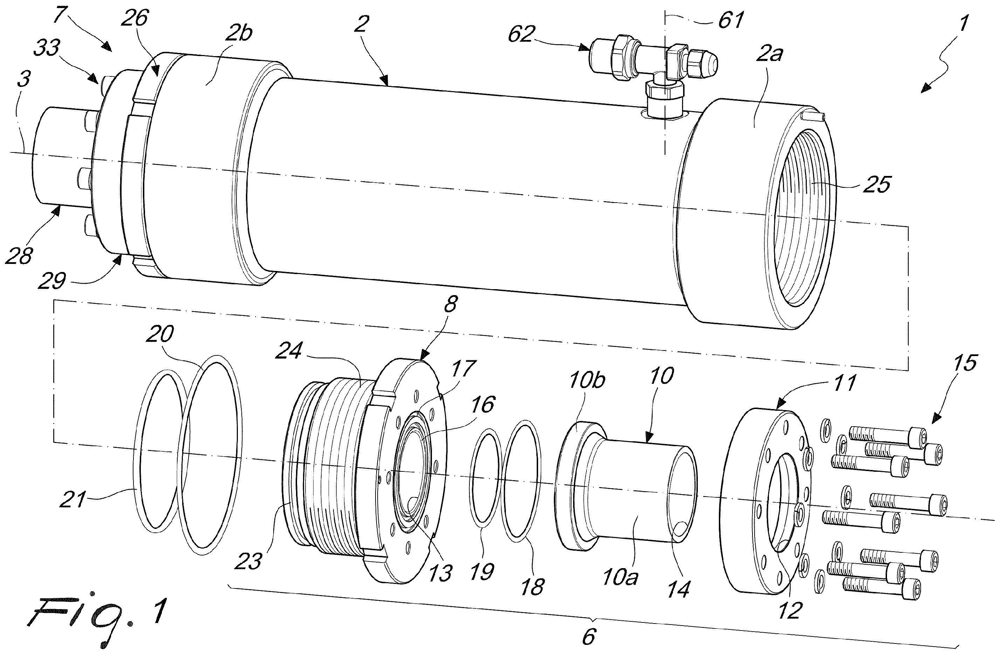

Furthermore, if the filtering assembly 5 needs to be replaced, it will be sufficient to remove one of the flanged assemblies 6 and 7 from the main body 2, for example the first flanged assembly 6 as shown in Figure 1, so as to have free access to the chamber 4 of the main body 2.

In practice it has been found that the dehydrating filter, according to the present invention, achieve the set aim and objects.

In fact, by virtue of the fact that the main body can be separated from the sleeves connecting to the pipes of the system by virtue of screw means, since it is not necessary to perform welding to close the filter, the dehydrating filter according to the invention is not affected by the problems of damage to elastomeric gaskets and to the berths as a consequence of possible overheating of the materials.

The seal between these two components is in fact taken care of by a pair of annular gaskets which are positioned in closed accommodation chambers so as to prevent the gaskets from being forced out of place.

Another advantage of the dehydrating filter, according to the invention, consists in that the absence of welds leads to fewer discarded seals at the production stage, and therefore it drastically reduces the number of pieces not eligible for testing.

Another advantage of the dehydrating filter, according to the invention, consists in that the lack of welds also ensures the quality of the seal of the product over time.

In fact, as there is no weld, there also cannot be any non-visible blisters inside it which could result in leaks over time owing to the use of the component at high operating pressures (in particular with refrigerant fluids such as R744 in a transcritical state).

Another advantage of the dehydrating filter, according to the invention, consists in that it makes it possible to facilitate and render less problematic the welding of the pipes to the filter by the end installation technician.

While in standard applications the installation technician has to braze weld the pipes to the filter while wrapping it in a wetted rag and taking great care not to overheat it, with the dehydrating filter according to the invention, this problem is overcome because the end user will remove the external flanges of the filter, then braze weld the pipes to the sleeves which are freed of the external flanges, and then remount the flanges by screwing and tightening the screws, complete with one-way washers.

In this manner, the operation to braze weld the pipes to the sleeves is not problematic in any way and can be carried out without taking any special precautions regarding the overheating of the component.

Another advantage of the dehydrating filter, according to the invention, consists in that it can be dismounted from the system without needing to cut the connecting pipes as occurs for conventional dehydrating filters.

In fact, if the filter should need to be replaced for any reason, for example owing to clogging of the filtering cartridges, the replacement operation is very simple.

It is in fact sufficient to disconnect the external flanges by acting on the connecting screws, extract the filtering assembly to be replaced, insert a new filtering assembly and reconnect the external flanges to the filtering assembly, re-tightening the screws.

Basically the external flanges always remain connected to the system and, if necessary, only the filtering assembly is changed, obviously complete with the internal components and sleeve.

Another advantage of the dehydrating filter, according to the invention, consists in that, by virtue of the double annular gasket - radial and front - at every possible leak point of the valve, it is possible to have an absolute assurance of the hermetic seal of the dehydrating filter in the immediate future, but above all for the entire life of the component.

Another advantage of the dehydrating filter, according to the invention, consists, by virtue of the external flanges which can be dismounted from the main body, in the possibility to modify the type of connections of the device without needing to change the entire filter.

If a filter has external flanges with seats for welding the pipe, these can be replaced for example with flanges with SAE male threading or flanges with pipe seats of various sizes.
Furthermore, the presence of "accessories" such as the gas charging/discharging tap makes it possible to release the pressure remaining in the filter prior to replacing the cartridges, to restore the necessary quantity of gas after the filtering cartridges have been replaced, or to apply measurement instruments.

Another accessory, "condensation drain", makes it possible to manually drain condensation in total safety without interrupting operation of the system.

Another advantage of the dehydrating filter, according to the invention, consists in that it is ecologically sustainable by virtue of the possibility to replace the filtering cartridges, differently from conventional hermetic filters which, typically, are disposable.

The invention thus conceived is susceptible of numerous modifications and variations, all of which are within the scope of the appended claims. Moreover, all the details may be substituted by other, technically equivalent elements.

For example, the dehydrating filter, according to the invention, can be made of many types of material (completely made of brass, of steel or with brass parts mixed with steel parts) according to requirements; the sealing gaskets can also be made of different materials according to the end application and the coolant gas used; the flanged assemblies of the invention can have different types of connection to the end application but all types are included in the inventive concept (with ODS pocket as described in the present description, for butt-welding of stainless steel pipes or with male or female threading according to any standard); the internal filtering elements can be of different types and different shapes and different materials, according to the gas present in the system; the filter can be produced with the body and sealing flange made both of brass and of stainless steel, and the elastomeric sealing gaskets must be capable of being produced in different blends depending on compatibility with the various refrigerant fluids.

In practice the materials employed, provided they are compatible with the specific use, and the contingent dimensions and shapes, may be any according to requirements and to the state of the art.

The disclosures in Italian Patent Application No. 102025000002406 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A dehydrating filter (1), particularly for refrigeration or air conditioning systems, **characterized in that** it comprises:
- a main body (2) having a substantially axially symmetrical geometry with respect to a longitudinal axis (3) thereof, defining inside it a chamber (4) which is open at the ends (2a, 2b) of said main body (2);
- a first flanged assembly (6), which is associated hermetically and detachably with said main body (2) at a first of said ends (2a) and is shaped so that it can be connected to a first pipe of a refrigeration or air conditioning system;
- a second flanged assembly (7), which is externally substantially mirror-symmetrical to said first flanged assembly (6), associated hermetically and detachably with said main body (2) at a second of said ends (2b) which is opposite from said first end (2a) and shaped so that it can be connected to a second pipe of said refrigeration or air conditioning system; and
- a filtering assembly (5), which is accommodated in said chamber (4) and is interposed between said first flanged assembly (6) and said second flanged assembly (7).

2. The dehydrating filter (1) according to claim 1, **characterized in that** said first flanged assembly (6) comprises:
- a first perforated ring (8), which is associated hermetically and detachably with said main body (2) by virtue of first fixing means (9) at said first end (2a);
- a first sleeve (10), which is associated hermetically and detachably with said first perforated ring (8) on the opposite side with respect to said main body (2) and comprises a first radially widened portion (10a), which rests on said first perforated ring (8), and a first tubular portion (10b) which is opposite from said first radially widened portion (10a) and is designed to be engaged by said first pipe;
- a first perforated flange (11), which is detachably associated with said first perforated ring (8) by virtue of first screw means (15) on the opposite side with respect to said main body (2); said first sleeve (10) being inserted in said first perforated flange (11) at said first tubular portion (10b) and being interposed between said first perforated flange (11) and said first perforated ring (8) at said first radially widened portion (10a); said first perforated ring (8) and said first sleeve (10) being connected to each other through respective central holes (13, 14) thereof.

3. The dehydrating filter (1) according to claim 1 or 2, **characterized in that** said first fixing means (9) comprise a first threaded connection, which is provided between said main body (2) and said first perforated ring (8) at said first end (2a) and comprises a first male thread (24) defined on one of either said main body (2) or said first perforated ring (8), and a first female thread (25) which corresponds to said first male thread (24) and is defined on the other one of either said main body (2) or said first perforated ring (8).

4. The dehydrating filter (1) according to one or more of the preceding claims, **characterized in that** said second flanged assembly (7) comprises:
- a second perforated ring (26), which is associated hermetically and detachably with said main body (2) by virtue of second fixing means (27) at said second end (2b);
- a second sleeve (28), which is associated hermetically and detachably with said second perforated ring (26) on the opposite side with respect to said main body (2) and comprises a second radially widened portion (28a), which rests on said second perforated ring (26), and a second tubular portion (28b) which is opposite from said second radially widened portion (28a) and is designed to be engaged by said second pipe;
- a second perforated flange (29), which is detachably associated with said second perforated ring (26) by virtue of second screw means (33) on the opposite side with respect to said main body (2); said second sleeve (28) being inserted in said second perforated flange (29) at said second tubular portion (28b) and being interposed between said second perforated flange (29) and said second perforated ring (26) at said second radially widened portion (28a); said second perforated ring (26) and said second sleeve (28) being in communication with each other and with said chamber (4) through respective central holes (31, 32) thereof.

5. The dehydrating filter (1) according to one or more of the preceding claims, **characterized in that** said second fixing means (27) comprise a second threaded connection, which is provided between said main body (2) and said second perforated ring (26) at said second end (2b) and comprises a second male thread (42) defined on one of either said main body (2) or said second perforated ring (26) and a second female thread (43) corresponding which corresponds to said second male thread (42) and is defined on the other one of either said main body (2) or said second perforated ring (26).

6. The dehydrating filter (1) according to one or more of the preceding claims, **characterized in that** said filtering assembly (5) comprises:
- a mesh filtering sleeve (44) with a substantially tubular geometric shape;
- at least one filtering cartridge (45) fitted on said mesh filtering sleeve (44);
- a first and a second filter holder disk (46, 47) which are associated, respectively, with the end portions (44a, 44b) of said mesh filtering sleeve (44) so as to axially couple together said at least one filtering cartridge (45) and said mesh filtering sleeve (44); and
- at least two cloth disks (48, 49) which are interposed, respectively, between: said first filter holder disk (46) and said at least one filtering cartridge (45) and between said at least one filtering cartridge (45) and said second filter holder disk (47);
- said filtering assembly (5) being accommodated in said chamber (4) so that said first filter holder disk (46) is located at said first end (2a) of said main body (2) and so that said second filter holder disk (47) is located at said second end (2b) of said main body (2).

7. The dehydrating filter (1) according to one or more of the preceding claims, **characterized in that** said at least one filtering cartridge (45) comprises two filtering cartridges (45a, 45b) fitted in series on said mesh filtering sleeve (44) and **in that** said at least two cloth disks comprise an additional cloth disk (50) interposed between said two filtering cartridges (45a, 45b).

8. The dehydrating filter (1) according to claim 6 or 7, **characterized in that** said first filter holder disk (46) is of the perforated type and is hermetically associated centrally and coaxially both with said mesh filtering sleeve (44) and with said first flanged assembly (6) so as to connect the inside of said mesh filtering sleeve (44) to the inside of said first flanged assembly (6) and isolate the inside of said chamber (4) from the inside of said first flanged assembly (6).

9. The dehydrating filter (1) according to one or more of claims 6 to 8, **characterized in that** said second filter holder disk (47) is of the closed type, is hermetically associated centrally and coaxially with said mesh filtering sleeve (44), and is spaced apart from said second flanged assembly (7) so as to connect said chamber (4) to the inside of said second flanged assembly (7) and isolate the inside of said mesh filtering sleeve (44) from the inside of said second flanged assembly (7).

10. The dehydrating filter (1) according to one or more of the preceding claims, **characterized in that** it comprises elastic means (56) interposed between said second flanged assembly (7) and said second filter holder disk (47) so as to compress said filtering assembly (5) into a pack.

11. The dehydrating filter (1) according to claims 9 and 10, **characterized in that** said second filter holder disk (47) comprises a shank (57) which protrudes axially toward said second flanged assembly (7) along said longitudinal axis (3) and **in that** said elastic means (56) comprise a helical spring (58) which is partially fitted over said shank (57) and rests on a contrast wall (59) of said second flanged assembly (7).

12. The dehydrating filter (1) according to one or more of the preceding claims, **characterized in that** said main body (2) has a first lateral opening (60) which is located at a portion of said chamber (4), extends along an axis (61) which is transverse with respect to said longitudinal axis (3), and is in communication with said chamber (4); said first lateral opening (60) being selectively connectable to a tap (62) for charging and discharging a refrigerant gas, and being provided with a first closure cap.
